# DEMANDE DE BREVET EUROPEEN

(11) **EP 1 125 680 A1**
(43) Date de publication de la demande: **22.08.2001**
(21) Numéro de dépôt: 01410004.4
(22) Date de dépôt: 18.01.2001
(51) Int. Cl.: B23Q 11/00

(54) **Dispositif de broyage et de pompage d'un mélange de copeaux métalliques et de fluide de coupe**

(30) Priorité: 18.01.2000 FR 0000619
(71) Demandeur: Ecofluide, 78500 Sartrouville (FR)
(72) Inventeur: Mocellin, Carlo, 38190 Froges (FR); Milliot, Pascal, 95370 Montigny les Cormeilles (FR)
(74) Mandataire: Hecké, Gérard

(57) **Abrégé**

Un dispositif de broyage et de pompage d'un mélange de copeaux métalliques et de fluide de coupe, comporte un broyeur (18)à couteaux, et une pompe de relevage (24). Le broyeur (18) est inséré entre un carter (28) délimitant un compartiment d'entrée (29) en liaison avec la bride d'accouplement (12) pour autoriser le déversement par gravité du mélange à broyer, et une goulotte d'aspiration (26) reliant la sortie de la grille de calibrage (42) à l'orifice d'admission (50) de la pompe de relevage(24). L'équipage mobile (66) de la pompe est positionné verticalement dans une enveloppe (74) fixe, laquelle possède une extrémité assujettie à la goulotte d'aspiration (26) pour définir l'orifice d'admission (50), et une extrémité opposée pourvue d'un flasque (78) coopérant par assemblage avec une platine de montage sur laquelle est fixé le moteur (72) d'entraînement de la pompe (24).

## Description

### Domaine technique de l'invention

L'invention est relative à un dispositif de broyage et de pompage d'un mélange de copeaux métalliques et de fluide de coupe, comprenant :
- un broyeur à couteaux rotatifs entraînés par un moto réducteur pour broyer les copeaux,
- une grille de calibrage pour autoriser le passage des copeaux broyés jusqu'à une certaine granulométrie,
- une pompe de relevage équipée d'un orifice d'admission et d'un tuyau de refoulement destiné à évacuer le mélange ayant traversé ladite grille, l'équipage mobile de ladite pompe étant positionné verticalement dans une enveloppe fixe en liaison avec l'orifice d'admission, et ayant un flasque coopérant par assemblage avec une platine de montage sur laquelle est fixé le moteur d'entraînement de la pompe,
- et une bride d'accouplement adaptée à la machine-outil distribuant le mélange à broyer.

### Etat de la technique

Dans un premier type d'installation connue, les copeaux métalliques d'une machine-outil sont transportés par un convoyeur dans une trémie d'un broyeur disposé à une hauteur prédéterminée au-dessus d'un bac de récupération, lequel prend appui sur le sol à côté de la machine-outil. Les copeaux broyés dans le broyeur tombent par gravité dans le bac, et le fluide de coupe est introduit séparément dans le même bac en se mélangeant avec les copeaux broyés. A l'intérieur du bac se trouve la pompe de relevage qui évacue le mélange copeaux et fluide de coupe vers une installation de filtration à travers un tuyau de refoulement vertical. L'utilisation d'un convoyeur augmente l'encombrement du dispositif, et complique le montage.

Dans un deuxième type d'installation connue, les copeaux et le fluide de coupe tombent par gravité dans le broyeur, lequel coiffe le bac de récupération situé dans une fosse sous le niveau du sol et de la machine-outil. Le génie civil nécessaire pour la mise en oeuvre de la fosse complique également l'installation.

Dans un troisième type d'installation connue, les copeaux sont acheminés par un convoyeur dans une benne de stockage, et seul le fluide coupe est évacué par la pompe de relevage vers l'installation de filtration. Cette solution utilise un convoyeur, et nécessite l'enlèvement de la benne de stockage après remplissage.

Le document WO 98/34758 se rapporte à un dispositif de broyage et de pompage du genre mentionné , dans lequel le broyeur est logé à l'intérieur d'un carter étanche, dont l'une des parois est équipée d'un orifice d'arrivée du mélange. La sortie du broyeur est connectée à l'admission de la pompe par un simple tuyau.

### Objet de l'invention

L'objet de l'invention consiste à réaliser un broyeur de relevage d'un mélange de copeaux et de fluide de coupe, ayant un encombrement réduit, pouvant être facilement raccordé à une machine-outil sans nécessiter de convoyeur ou de fosse, et ayant un fonctionnement fiable évitant tout colmatage.

Le dispositif selon l'invention est caractérisé en ce que :
- le broyeur est inséré entre un carter délimitant un compartiment d'entrée en liaison avec la bride d'accouplement pour autoriser le déversement par gravité du mélange à broyer, et une goulotte d'aspiration reliant la sortie de la grille de calibrage à l'orifice d'admission de la pompe de relevage,
- une rampe de lavage est prévue dans la goulotte d'aspiration pour injecter un jet de liquide de lavage pendant le broyage,
- et une bâche de rétention est agencée sous la goulotte d'aspiration en constituant l'embase de support du broyeur et de la pompe de relevage.

L'assemblage des trois pièces constituées par le carter du compartiment d'entrée, le broyeur et la goulotte d'aspiration permet d'éviter l'emploi d'une cuve étanche commune. La présence de la rampe de lavage dans la goulotte d'aspiration empêche tout colmatage à la sortie du broyeur.

Selon un mode de réalisation préférentiel, la goulotte d'aspiration est en forme d'entonnoir, et est inclinée vers le bas en direction de l'orifice d'admission de la pompe de relevage. Un trop plein est intégré à la partie supérieure du compartiment d'entrée, et est relié par une surverse et une tuyauterie à l'orifice d'admission de la pompe. La paroi supérieure du carter comporte en plus un reniflard, et une trappe de visite pour visualiser les couteaux du broyeur.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés dans lesquels:
- la figure 1 est une vue en coupe du dispositif de broyage et de pompage selon l'invention;
- la figure 2 montre une vue identique de la figure 1 après enlèvement de l'équipage mobile de la pompe de relevage ;
- les figures 3 et 4 sont des vues de profil et en élévation du dispositif de broyage et de pompage selon l'invention;
- la figure 5 est une vue en plan de la figure 4 ;
- la figure 6 représente une vue en coupe de la cassette du broyeur.

### Description d'un mode de réalisation préférentiel

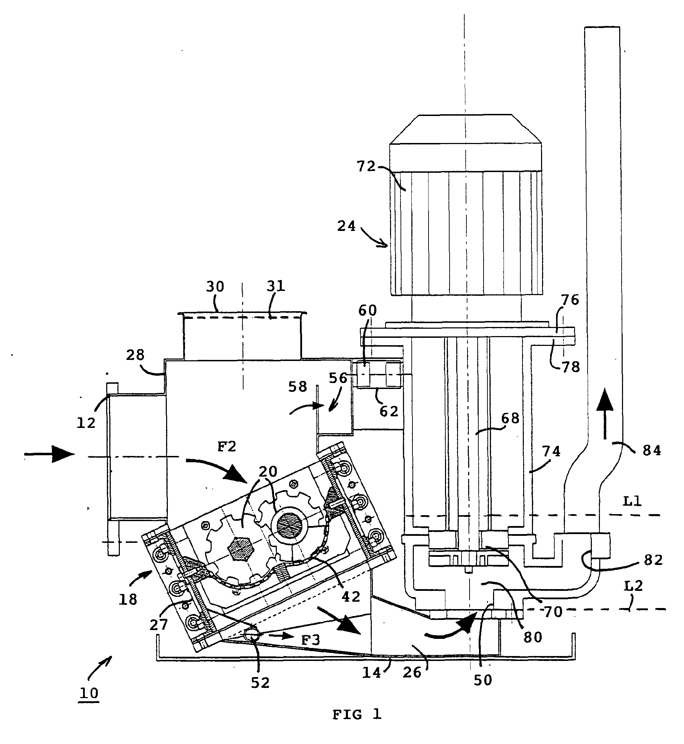

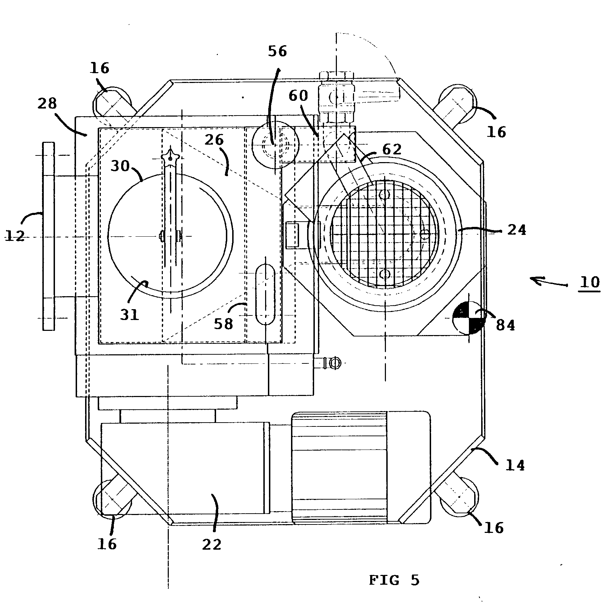

Sur les figures 1 à 6, un dispositif de broyage et de pompage 10 de copeaux métalliques est raccordé par une bride d'accouplement 12 à une machine-outil (non représentée), laquelle évacue lors de l'usinage, un mélange de copeaux et de fluide de coupe dans le dispositif de broyage 10.

Le dispositif de broyage et de pompage 10 est monté à la partie inférieure sur une embase de support 14 servant simultanément de bâche de rétention. L'embase de support 14 prend directement appui sur le sol, et est est équipée de vérins 16 à Via disposés aux quatre coins pour la mise à niveau de l'ensemble par rapport au bâti de la machine-outil.

Le dispositif de broyage et de pompage 10 comporte un broyeur 18 à couteaux 20 rotatifs entraînés par un motoréducteur 22, et une pompe de relevage 24 reliée à la sortie du broyeur 18 par une goulotte d'aspiration 26.

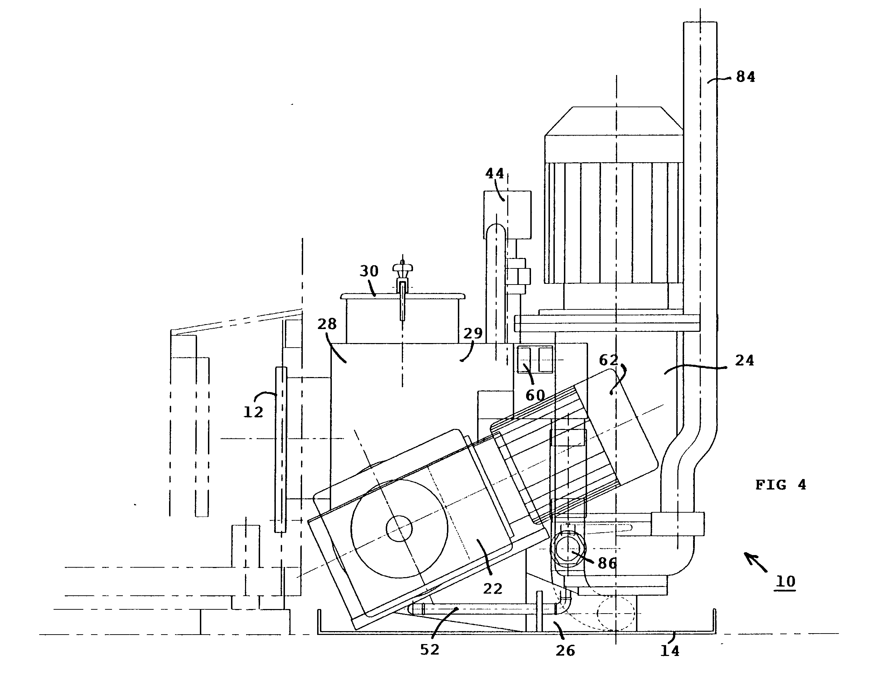

Le broyeur 18 est logé dans une cassette 27 placée sous un carter 28 métallique délimitant un compartiment d'entrée 29, et doté d'une trappe de visite 30 à la partie supérieure, permettant après enlèvement de visualiser les couteaux 20 à travers une grille de sécurité 31. La bride d'accouplement 12 est raccordée au compartiment d'entrée 29 dans lequel est introduit le mélange copeaux et fluide de coupe. Le motoréducteur 22 est facilement accessible en étant agencé à l'extérieur de la chambre de broyage 48, et l'arbre d'entraînement 32 du motoréducteur 22 traverse à étanchéité la cassette 27 du broyeur 18 en étant accouplé à deux axes 38, 40 parallèles supportant les couteaux 20 rotatifs. Un mécanisme de transmission à engrenages 34, 36 permet d'entraîner les deux axes 38, 40 en sens inverse, et les copeaux sont broyés dans l'intervalle central séparant les deux séries de couteaux 20. Une grille de calibrage 42 formée par une tôle perforée, est disposée sous les couteaux 20 et à l'entrée de la goulotte d'aspiration 26. Les trous de la grille 42 sont choisis pour autoriser le passage vers l'admission de la pompe 24 des copeaux broyés avec une granulométrie prédéterminée. Les copeaux de plus grandes dimensions sont retenus par la grille 42, et retournent vers l'entrée des couteaux 20 pour la poursuite du broyage. Un contrôleur de niveau 44 (figure 4) plonge dans le carter 28, et détecte le colmatage de la grille de calibrage 42, et tout niveau anormal du mélange à l'intérieur du carter 28.

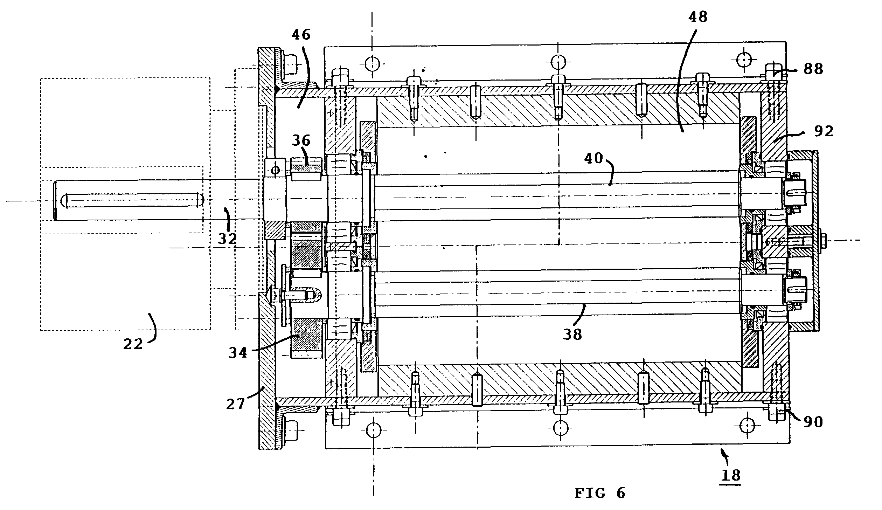

La cassette 27 du broyeur 18 est insérée entre le compartiment d'entrée 29 et la goulotte d'aspiration 26, et le motoréducteur 22 peut être démonté sans vidanger le broyeur 18. Le mécanisme de transmission à engrenages 34, 36 se trouve dans un compartiment 46 intermédiaire (figure 6) séparé de la chambre de broyage 48. Le fluide de coupe est contenu exclusivement dans la chambre de broyage 48 à couteaux 20, mais pas dans le compartiment 46 intermédiaire.

La goulotte d'aspiration 26 est en forme d'entonnoir, et est inclinée vers la bas en direction de l'orifice d'admission 50 de la pompe de relevage 24. Une rampe de lavage 52 permet d'injecter en permanence un jet de liquide de lavage dans la goulotte d'aspiration 26 pour éviter tout bouchon de colmatage à la sortie du broyeur 18. Le liquide de lavage est constitué avantageusement par du fluide de coupe, lequel comprend soit de l'huile, soit une émulsion formé par un mélange de 95% d'eau et de 5% d'huile. La rampe de lavage 52 est raccordée à une tubulure 54 verticale permettant l'injection du liquide de lavage.

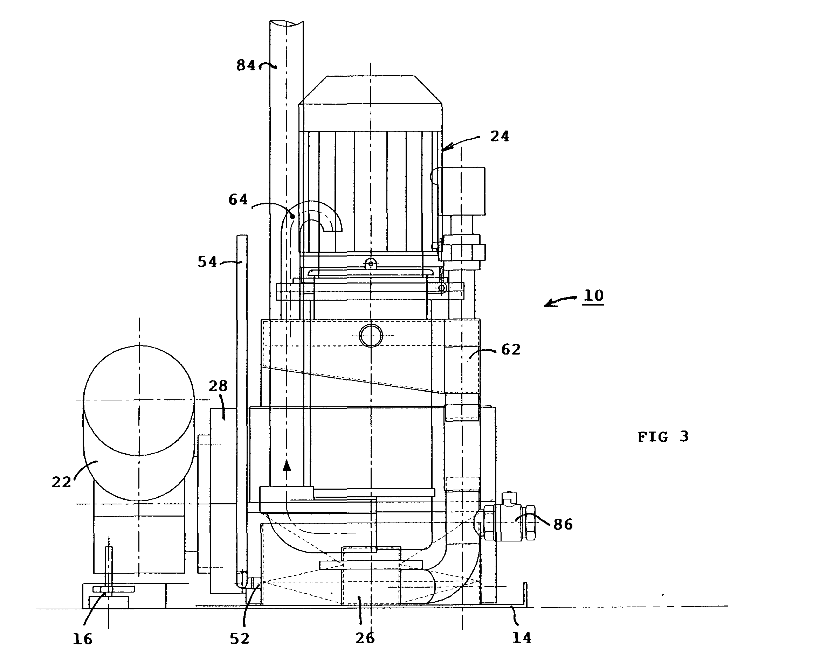

Un trop-plein 56 intégré dans la partie supérieure du carter 28, comporte une grille de séparation 58 verticale, et une surverse 60 reliée directement à l'admission de la pompe 24 par une tuyauterie 62. Le surplus de liquide dans le carter 28 ne passe pas dans le broyeur 18, mais est ainsi dirigé directement vers la pompe 24. Un reniflard 64( figure 3) formé par un tube coudé en U renversé, est également prévu sur la paroi supérieure du carter 28.

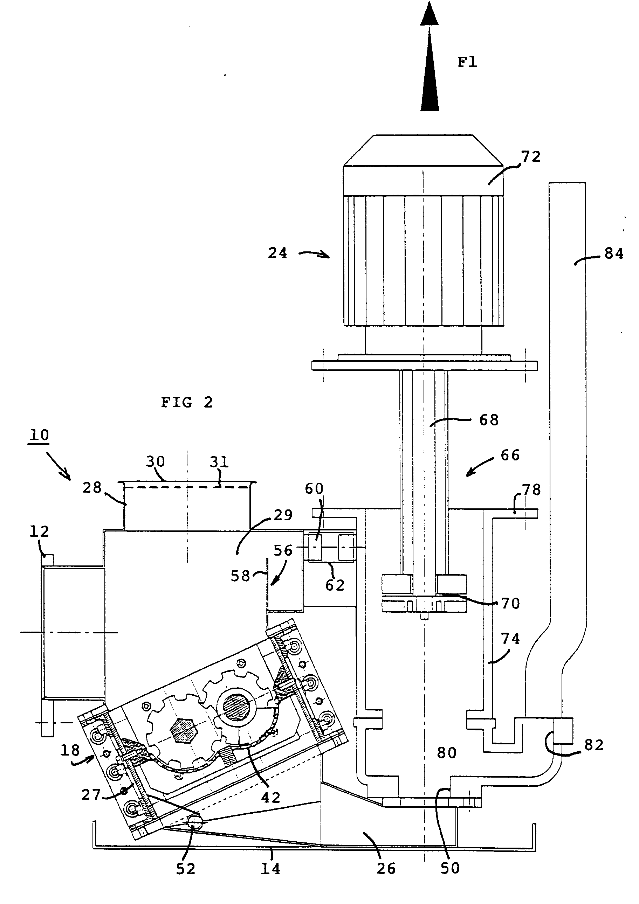

La pompe de relevage 24 (figures 1 et 2) comporte un équipage mobile 66 à axe 68 vertical comprenant une roue à aubes 70 entraînée par un moteur 72. L'équipage mobile 66 est logé dans une enveloppe 74 fixe de forme tubulaire, assujettie à la goulotte d'aspiration 26 pour définir l'orifice d'admission 50. La roue à aubes 70 est située au niveau du broyeur 18 et au-dessus de l'orifice d'admission 50 lors de l'assemblage d'une platine 76 de montage de l'équipage mobile 66 sur un flasque 78 de l'enveloppe 74. La chambre de pompage 80 est reliée d'autre à un orifice d'échappement 82 auquel se raccorde un tuyau 84 vertical de refoulement du mélange vers une installation de traitement (non représentée). Pour le démontage de la pompe 24, il suffit d'enlever les vis de fixation (non représentées) de la platine 76 de montage, et de retirer l'équipage mobile 66 vers le haut (flèche F1, figure 2). Il est alors possible d'accéder facilement à la chambre de pompage 80, et aux orifices d'admission 50, et d'échappement 82.

Une vanne de vidange 86 est intercalée dans la tuyauterie 62 au niveau de la chambre de pompage 80 pour diminuer le niveau du liquide, et pour faciliter le nettoyage de la goulotte d'aspiration 26 et de la chambre de pompage 80. L'orifice d'admission 50 de la pompe 24 n'est pas noyé dans la bâche de rétention de l'embase 14, mais est raccordé de manière étanche à l'extrémité de la goulotte d'aspiration 26.

Le fonctionnement du dispositif de broyage 10 selon les figures 1 à 6 est le suivant:

Le mélange copeaux et fluide de coupe en provenance de la machine-outil tombe par gravité dans la chambre de broyage 48 du broyeur 18, et traverse la grille de calibrage 42 après broyage pour être guidé vers la goulotte d'aspiration 26. Le sens de circulation est indiqué sur la figure 1 par la flèche F2, et la pompe de relevage 24 refoule le mélange broyé à travers le tuyau 84 de refoulement pour le traitement ultérieur dans l'installation d'épuration extérieure. La flèche F3 montre la circulation du fluide de coupe issu de la rampe de lavage 52, qui se mélange dans la goulotte d'aspiration 26 et à la sortie du broyeur 18 avec le mélange broyé.

Sur la figure 1, la ligne L1 représente le niveau d'amorçage de la pompe 24, et la ligne L2 correspond au niveau de désarmorçage. Le broyeur 18 est positionné entre les deux lignes L1 et L2, et reste toujours immergé dans le mélange lors du fonctionnement normal de la machine-outil. Les axes 38, 40 d'entraînement des couteaux 20 du broyeur 18 sont positionnés dans un plan incliné faisant un angle aigu avec le plan horizontal de l'embase de support 14. La chambre de pompage 80 dans laquelle tourne la roue à aubes 70 est également située dans l'intervalle entre les deux niveaux L1 et L2.

La goulotte d'aspiration 26 est lavée en permanence par la rampe de lavage 52 pour éviter tout colmatage à la sortie du broyeur 18. Pour un débit de 300l/minute du mélange à broyer en provenance de la machine-outil, le débit de la rampe de lavage 52 est de l'ordre de 50l/minute. En fonctionnement normal, le broyeur 18 et la pompe de relevage 24 sont immergés en permanence, et la surverse 60 shunte une partie du liquide lorsque le mélange atteint un certain niveau dans le trop-plein 56 du carter 28. La pompe de relevage 24 refoule le mélange broyé vers une installation de filtration et d'épuration.

On peut accéder aux couteaux 20 du broyeur 18 sans démonter entièrement l'installation. A l'opposé du motoréducteur 22, il suffit de dévisser les vis 88, 90 pour retirer le flasque 92 permettant l'accès à la chambre de broyage 48 sans désaccoupler l'arbre 32 du motoréducteur 22.

Un tel agencement du dispositif de broyage 10 présente un encombrement réduit, et ne nécessite ni de carter commun à l'ensemble broyeur 18 et pompe de relevage 24, ni de convoyeur pour véhiculer les copeaux vers le broyeur, et ni de génie civil pour la fabrication d'une fosse de rétention.

Selon une variante de réalisation (non représentée) ne nécessitant pas de broyage des copeaux, le broyeur 18 peut être remplacé par un châssis intermédiaire vide, ayant les mêmes dimensions que celles de la cassette 27 du broyeur 18 des figures 1 et 6.

## Revendications

1. Dispositif de broyage et de pompage d'un mélange de copeaux métalliques et de fluide de coupe, comprenant :
- un broyeur (18) à couteaux (20) rotatifs entraînés par un moto réducteur (22) pour broyer les copeaux,
- une grille de calibrage (42) pour autoriser le passage des copeaux broyés jusqu'à une certaine granulométrie,
- une pompe de relevage (24) équipée d'un orifice d'admission (50) et d'un tuyau de refoulement (84) destiné à évacuer le mélange ayant traversé ladite grille, l'équipage mobile (66) de ladite pompe (24) étant positionné verticalement dans une enveloppe (74) fixe en liaison avec l'orifice d'admission (50), et ayant un flasque (78) coopérant par assemblage avec une platine de montage sur laquelle est fixé le moteur (72) d'entraînement de. la pompe (24),
- et une bride d'accouplement (12) adaptée à la machine-outil distribuant le mélange à broyer, caractérisé en ce que :
- le broyeur (18) est inséré entre un carter (28) délimitant un compartiment d'entrée (29) en liaison avec la bride d'accouplement (12) pour autoriser le déversement par gravité du mélange à broyer, et une goulotte d'aspiration (26) reliant la sortie de la grille de calibrage (42) à l'orifice d'admission (50) de la pompe de relevage (24),
- une rampe de lavage (52) est prévue dans la goulotte d'aspiration (26) pour injecter un jet de liquide de lavage pendant le broyage,
- et une bâche de rétention est agencée sous la goulotte d'aspiration (26) en constituant l'embase de support (14) du broyeur (18) et de la pompe de relevage (24).

2. Dispositif de broyage et de pompage d'un mélange de copeaux métalliques et de fluide de coupe selon la revendication 1, caractérisé en ce que la goulotte d'aspiration (26) est inclinée vers le bas en direction de l'orifice d'admission (50) de la pompe de relevage (24).

3. Dispositif de broyage et de pompage d'un mélange de copeaux métalliques et de fluide de coupe selon la revendication 1 ou 2, caractérisé en ce que la goulotte d'aspiration (26) est en forme d'entonnoir.

4. Dispositif de broyage et de pompage d'un mélange de copeaux métalliques et de fluide de coupe selon la revendication 1, caractérisé en ce qu'un trop plein (56) est intégré à la partie supérieure du compartiment d'entrée (29), et est relié par une surverse (60) et une tuyauterie (62) à l'orifice d'admission (50) de la pompe (24).

5. Dispositif de broyage et de pompage d'un mélange de copeaux métalliques et de fluide de coupe selon la revendication 1, caractérisé en ce que la paroi supérieure du carter (28) comporte en plus un reniflard (64), et une trappe de visite (30) pour visualiser les couteaux (20) du broyeur (18).

6. Dispositif de broyage et de pompage d'un mélange de copeaux métalliques et de fluide de coupe selon la revendication 4, caractérisé en ce que la tuyauterie (62) d'évacuation de la surverse (60) est dotée d'une vanne de vidange (86) située au niveau de la chambre de pompage (80).

7. Dispositif de broyage et de pompage d'un mélange de copeaux métalliques et de fluide de coupe selon la revendication 1, caractérisé en ce que les couteaux (20) rotatifs du broyeur (18) sont répartis sur deux axes (38, 40) entraînés en sens inverse par le moteur réducteur (22) accouplé à un mécanisme de transmission à engrenages (34, 36), lequel est logé dans un compartiment (46) intermédiaire séparé de la chambre de broyage (48).

8. Dispositif de broyage et de pompage d'un mélange de copeaux métalliques et de fluide de coupe selon la revendication 1, caractérisé en ce que la roue à aubes (70) de la pompe (24) est située sensiblement au niveau du broyeur (18), et au-dessus de l'orifice d'admission (50).

9. Dispositif de broyage et de pompage d'un mélange de copeaux métalliques et de fluide de coupe selon la revendication 1, caractérisé en ce que le liquide de lavage de la rampe (52) est constituée par du fluide de coupe.
